# EUROPÄISCHE PATENTSCHRIFT

(11) **EP 4 015 124 B1**
(45) Veröffentlichungstag und Bekanntmachung des Hinweises auf die Patenterteilung: **19.02.2025**
(21) Anmeldenummer: 20216165.9
(22) Anmeldetag: 21.12.2020
(51) Int. Cl.: B23C 5/22

(54) **WERKZEUG FÜR DIE ZERSPANENDE BEARBEITUNG**
TOOL FOR MACHINING
OUTIL D'USINAGE PAR ENLÈVEMENT DES COPEAUX

(43) Veröffentlichungstag der Anmeldung: 22.06.2022
(73) Patentinhaber: CERATIZIT Austria Gesellschaft m.b.H., 6600 Reutte (AT)
(72) Erfinder: BURTSCHER, Peter, 6600 Reutte (AT)
(74) Vertreter: Ciesla, Dirk

(56) Entgegenhaltungen:
- CN-A- 106 624 100
- US-A- 3 805 351
- US-B2- 10 286 459

## Beschreibung

Die vorliegende Erfindung betrifft ein Werkzeug für die zerspanende Bearbeitung gemäß dem Oberbegriff von Anspruch 1 und ein Verfahren zum Befestigen eines Schneideinsatzes an einem Sitz eines Grundkörpers eines solchen Werkzeugs.

Bei der zerspanenden Bearbeitung von insbesondere metallischen Werkstoffen und zunehmend auch Verbundwerkstoffen kommen häufig Werkzeuge zum Einsatz, bei denen die mit dem zu zerspanenden Material in Eingriff kommenden Schneiden an auswechselbaren Schneideinsätzen ausgebildet sind, die aus einem harten und verschleißbeständigen Material gebildet sind und die an dafür vorgesehenen Sitzen an einem Grundkörper angeordnet sind, der aus einem zäheren Material, wie insbesondere z.B. Werkzeugstahl, gebildet ist. Die auswechselbaren Schneideinsätze sind dabei häufig als sogenannte Wendeschneidplatten bzw. indexierbare Schneideeinsätze ausgebildet, die eine Mehrzahl von Schneiden aufweisen, die nacheinander in eine aktive Schneidenposition an dem Grundkörper gebracht werden können, wenn die jeweils vorangehende Schneide verschlissen ist. Die Schneideinsätze können dabei typischerweise aus Hartmetall (cemented carbide), Cermet oder einer Schneidkeramik gebildet sein.

Bei Werkzeugen, die für eine zerspanende Bearbeitung durch Fräsen ausgelegt sind, hat der Grundkörper eine Rotationsachse, um die der Grundkörper im Betrieb des Werkzeugs rotiert.

Der Grundkörper kann z.B. nur einen Sitz zur Aufnahme eines auswechselbaren Schneideinsatzes aufweisen. Typischerweise ist aber eine Mehrzahl von solchen Sitzen vorgesehen, die über den Umfang des Grundköpers des Werkzeugs verteilt angeordnet sind. Um die Produktivität bei der Zerspanung mit solchen Werkzeugen zu steigern, gibt es einen Trend dazu, die Werkzeuge bei geeigneten Werkstoffen mit immer höheren Drehzahlen zu betreiben und als sogenannte Hochgeschwindigkeitsfräser oder High-Speed-Cutter auszulegen, bei denen die Drehzahlen oftmals mehrere Zehntausend Umdrehungen pro Minute betragen.

Bei einem Betrieb solcher Werkzeuge mit sehr hohen Drehzahlen stellen neben den typischerweise auftretenden, hauptsächlich in der tangentialen Richtung und der axialen Richtung wirkenden Zerspanungskräften insbesondere auch die aufgrund der hohen Drehzahlen auf die Schneideinsätze einwirkenden Fliehkräfte ein Problem dar. Sofern in der folgenden Beschreibung die Begriffe radial, axial und tangential verwendet werden, so beziehen sich diese jeweils auf die Rotationsachse des Grundkörpers des Werkzeugs, sofern sich aus dem konkreten Kontext nicht eine andere Bezugnahme ergibt.

Die hohen Fliehkräfte können z.B. in dem Fall, dass der Schneideinsatz mittels einer Befestigungsschraube an dem Sitz befestigt ist, dazu führen, dass sich die Position der Schneideinsätze an ihren Sitzen am Grundkörper verändert und können im Extremfall auch zu einem Versagen der Befestigungsschraube führen, sodass sich der Schneideinsatz von dem Sitz löst. Wenn dies während der zerspanenden Bearbeitung passiert, so kann dies zu einer Beschädigung des zu bearbeitenden Werkstücks führen und stellt zudem ein Sicherheitsrisiko dar.

US 10,286,459 B2 beschreibt ein Werkzeug gemäß dem Oberbegriff von Anspruch 1.

US 3,805,351 A beschreibt ein Verfahren zum reversiblen Befestigen eines Schneideinsatzes in einer Ausnehmung am Umfang eines rotierenden Werkzeugkörpers mittels eines mit einem Gewinde versehenen Klemmelement, das dazu angepasst ist, den Schneideinsatz flach gegen eine Sitzfläche und fest gegen Kantenpositionierungsflächen zu klemmen, wenn das Klemmelement in den Werkzeugkörper eingeschraubt wird.

EP 1 083 017 A1 beschreibt ein Zerspanungswerkzeug für die Hochgeschwindigkeitsbearbeitung, bei dem der Sitz für die Aufnahme eines auswechselbaren Schneideinsatzes mit einer in gewissem Maße formschlüssig mit der Unterseite des Schneideinsatzes zusammenwirkenden Form versehen ist.

Es ist Aufgabe der vorliegenden Erfindung, ein verbessertes Werkzeug für die zerspanende Bearbeitung mit hohen Rotationsgeschwindigkeiten, eine verbesserte Verwendung eines Schneideinsatzes und ein verbessertes Verfahren zum Befestigen eines Schneideinsatzes bereitzustellen, bei denen ein Schneideinsatz in einer gegenüber Fertigungstoleranzen unempfindlichen Weise zuverlässig gegen wirkende Fliehkräfte abgestützt wird und die Spannkraft, mit der der Schneideinsatz in einem Sitz verspannt ist, innerhalb eines engeren Bereichs vorgegeben werden kann.

Die Aufgabe wird durch ein Werkzeug für die zerspanende Bearbeitung nach Anspruch 1 gelöst. Vorteilhafte Weiterbildungen sind in den abhängigen Ansprüchen angegeben.

Das Werkzeug hat einen Grundkörper, der eine Rotationsachse hat, um die das Werkzeug im Betrieb rotiert, zumindest einen an dem Grundkörper ausgebildeten Sitz zur Aufnahme eines auswechselbaren Schneideinsatzes, eine Befestigungsschraube zur Befestigung des Schneideinsatzes an dem Sitz, und einen an dem Sitz befestigten Schneideinsatz. Der Sitz weist eine Grundfläche zur Auflage einer Unterseite des Schneideinsatzes, eine erste seitliche Anlagefläche zur Anlage einer ersten Seitenfläche des Schneideinsatzes, welche erste seitliche Anlagefläche den Schneideinsatz nach radial innen abstützt, und eine zweite seitliche Anlagefläche zur Anlage einer zweiten Seitenfläche des Schneideinsatzes, welche zweite seitliche Anlagefläche den Schneideinsatz axial und nach radial außen abstützt, auf. In der Grundfläche ist eine Bohrung zur Aufnahme der Befestigungsschraube ausgebildet. Die Bohrung weist beabstandet von der Grundfläche eine Gewindebohrung und näher in Richtung der Grundfläche einen gewindefreien Bohrungsabschnitt auf. Die Befestigungsschraube weist einen Gewindeabschnitt zum Zusammenwirken mit der Gewindebohrung, einen Kopfabschnitt zum Abstützen in einem Durchgangsloch des Schneideinsatzes und zwischen dem Gewindeabschnitt und dem Kopfabschnitt einen gewindefreien Schaftabschnitt auf, welcher gewindefreie Schaftabschnitt einen kleineren Querschnitt als der gewindefreie Bohrungsabschnitt aufweist. Der Schneideinsatz ist derart an dem Sitz befestigt, dass sich der Kopfabschnitt der Befestigungsschraube an dem Durchgangsloch des Schneideinsatzes abstützt, der Gewindeabschnitt der Befestigungsschraube mit der Gewindebohrung zusammenwirkt und der Kopfabschnitt der Befestigungsschraube derart elastisch ausgelenkt ist, dass sich der gewindefreie Schaftabschnitt in Blickrichtung senkrecht zu der Grundfläche in einem radial äußeren und axial in Richtung eines freien Endes des Werkzeugs befindlichen zweiten Quadranten an dem gewindefreien Bohrungsabschnitt abstützt.

In Blickrichtung senkrecht zu der Grundfläche, weist die Bohrung vier Quadranten auf, von denen sich zwei (ein dritter Quadrant und ein vierter Quadrant) radial innen, also näher an der Rotationsachse des Grundkörpers, befinden und zwei (ein erster Quadrant und ein zweiter Quadrant) radial außen, also weiter von der Rotationsachse des Grundkörpers entfernt. Einer der radial innen befindlichen Quadranten, der dritte Quadrant, und einer der radial außen befindlichen Quadranten der Bohrung, der zweite Quadrant, befinden sich jeweils axial in Richtung des freien Endes des Werkzeugs, was im Folgenden auch als "axial vorne" bezeichnet wird. Der jeweils andere der radial innen befindlichen Quadranten, der vierte Quadrant, und der radial außen befindlichen Quadranten, der erste Quadrant, befindet sich jeweils von dem freien Ende des Werkzeugs abgewandt, also in Richtung des Einspannendes des Werkzeugs, was im Folgenden auch als "axial hinten" bezeichnet wird. Es gibt somit - im Uhrzeigersinn betrachtet - einen radial äußeren und axial von dem freien Ende abgewandten ersten Quadranten, einen radial äußeren und axial in Richtung des freien Endes befindlichen zweiten Quadranten, einen radial inneren und axial in Richtung des freien Endes befindlichen dritten Quadranten und einen radial inneren und axial von dem freien Ende abgewandten vierten Quadranten.

Da die zweite seitliche Anlagefläche zur Anlage einer zweiten Seitenfläche des Schneideinsatzes vorgesehen ist, die den Schneideinsatz axial und nach radial außen abstützt, und zusätzlich die Befestigungsschraube derart elastisch ausgelenkt ist, dass sich der gewindefreie Schaftabschnitt in dem radial äußeren und axial in Richtung des freien Endes des Werkzeugs befindlichen zweiten Quadranten an dem gewindefreien Bohrungsabschnitt abstützt, ist der Schneideinsatz an zwei räumlich voneinander beabstandeten Positionen in formschlüssiger Weise gegen Fliehkraft abgestützt, sodass ein Auswandern des Schneideinsatzes aus dem Sitz auch bei hohen Drehzahlen des Werkzeugs zuverlässig verhindert ist. Da das Abstützen des gewindefreien Schaftabschnitts an dem gewindefreien Bohrungsabschnitt über eine elastische Auslenkung des Kopfabschnittes und des gewindefreien Bohrungsabschnitts der Befestigungsschraube erfolgt, können dabei Fertigungstoleranzen der ersten und zweiten seitlichen Anlageflächen, der Bohrung und der Befestigungsschraube zuverlässig über die elastische Deformation der Befestigungsschraube kompensiert werden. Ferner kann die Spannkraft, mit der der Schneideinsatz an dem Sitz verspannt wird, über die elastischen Eigenschaften der Spannschraube vorgegeben werden.

Gemäß einer Weiterbildung ist der gewindefreie Schaftabschnitt in einem radial innen und von dem freien Ende des Werkzeugs abgewandt befindlichen vierten Quadranten von dem gewindefreien Bohrungsabschnitt beabstandet. Der gewindefreie Bohrungsabschnitt weist folglich ein entsprechendes Übermaß gegenüber dem gewindefreien Schaftabschnitt der Befestigungsschraube auf, sodass diese ungehindert elastisch ausgelenkt werden kann, bis der gewindefreie Schaftabschnitt in dem radial außen und in Richtung des freien Endes des Werkzeugs befindlichen Quadranten an dem gewindefreien Bohrungsabschnitt anliegt. In dieser Weise können Toleranzen des Schneideinsatzes und der seitlichen Anlageflächen besonders gut kompensiert werden. Bevorzugt ist der gewindefreie Schaftabschnitt auch in dem ersten Quadranten und in dem dritten Quadranten von dem gewindefreien Bohrungsabschnitt beabstandet.

Wenn der Kopfabschnitt der Befestigungsschraube elastisch nach radial außen und axial in Richtung des freien Endes des Werkzeugs ausgelenkt ist, wird der Schneideinsatz besonders zuverlässig gegen sowohl die erste seitliche Anlagefläche als auch die zweite seitliche Anlagefläche gespannt.

Gemäß einer Weiterbildung schließen die erste seitliche Anlagefläche und die zweite seitliche Anlagefläche in einer Blickrichtung senkrecht zu der Grundfläche einen Winkel < 75° miteinander ein. In diesem Fall ist der Schneideinsatz besonders zuverlässig formschlüssig eingefasst und somit gegenüber wirkenden Fliehkräften gesichert. Bevorzug kann der Winkel < 65° sein. Der von der ersten seitlichen Anlagefläche und der zweiten seitlichen Anlagefläche eingeschlossene Winkel beträgt dabei bevorzugt > 35°, mehr bevorzugt > 40°, um eine zuverlässige Einfassung des Schneideinsatzes an dem Sitz bereitzustellen.

Gemäß einer Weiterbildung hat der Kopfabschnitt der Befestigungsschraube einen größten Querschnitt senkrecht zu einer Achse der Befestigungsschraube, der größer als ein kleinster Querschnitt des Durchgangslochs ist. Mit anderen Worten lässt sich in diesem Fall der Kopfabschnitt der Befestigungsschraube nicht durch das Durchgangsloch des Schneideinsatzes hindurchführen. In diesem Fall ist der Schneideinsatz besonders zuverlässig formschlüssig an dem Sitz befestigt.

Gemäß einer Weiterbildung ist eine Längsachse der Gewindebohrung in einer Ebene des Kontakts zwischen dem Kopfabschnitt der Befestigungsschraube und dem Durchgangsloch des Schneideinsatzes gegenüber der Längsachse des Durchgangsloches in Richtung zu der ersten seitlichen Anlagefläche und in Richtung zu der zweiten seitlichen Anlagefläche versetzt. In diesem Fall wird der Schneideinsatz zuverlässig in Richtung der ersten seitlichen Anlagefläche und in Richtung der zweiten seitlichen Anlagefläche gespannt und der gewindefreie Schaftabschnitt der Befestigungsschraube wird zuverlässig durch elastische Auslenkung zur Anlage an dem gewindefreien Bohrungsabschnitt gebracht.

Wenn eine Flächennormale der ersten seitlichen Anlagefläche eine nach radial außen gerichtete Richtungskomponente als Hauptkomponente aufweist, dann stützt die erste seitliche Anlagefläche den Schneideinsatz besonders zuverlässig gegenüber nach radial innen wirkenden Kräften ab. Neben der nach radial außen gerichteten Richtungskomponente kann die Flächennormale auch noch betragsmäßig kleinere Richtungskomponenten in der axialen Richtung und/oder der tangentialen Richtung aufweisen.

Gemäß einer Weiterbildung weist eine Flächennormale der zweiten seitlichen Anlagefläche eine axiale Richtungskomponente und eine nach radial innen gerichtete Richtungskomponente auf. In diesem Fall wird der Schneideinsatz zuverlässig über die zweite seitliche Anlagefläche gegenüber axial wirkenden Kräften und gegenüber Fliehkräften abgestützt. Die Flächennormale der zweiten seitlichen Anlagefläche kann außerdem auch noch eine - betragsmäßig kleinere - tangentiale Richtungskomponente aufweisen.

Gemäß einer Weiterbildung weist eine Flächennormale der Grundfläche eine tangentiale Richtungskomponente als Hauptkomponente auf. In diesem Fall ist der Schneideinsatz an dem Sitz besonders zuverlässig gegenüber den hauptsächlich in der tangentialen Richtung wirkenden Zerspanungskräften abgestützt. Die Flächennormale der Grundfläche kann außerdem auch noch betragsmäßig kleinere Richtungskomponenten in der radialen Richtung und/oder der axialen Richtung aufweisen.

Gemäß einer Weiterbildung ist die Wand des gewindefreien Bohrungsabschnitts zumindest in dem radial außen und axial in Richtung des freien Endes des Werkzeugs befindlichen zweiten Quadranten der Bohrung bohrungsseitig in Umfangsrichtung konkav gekrümmt ausgebildet. In diesem Fall werden Toleranzen im Bereich der ersten seitlichen Anlagefläche und der zweiten seitlichen Anlagefläche sowie des mit diesen zusammenwirkenden Schneideinsatzes besonders zuverlässig dadurch kompensiert, dass sich der Kontaktbereich des gewindefreien Schaftabschnittes an dem gewindefreien Bohrungsabschnitt bei der elastischen Auslenkung des Kopfabschnittes innerhalb eines größeren Winkelbereichs in dem zweiten Quadranten einstellen kann.

Gemäß einer Weiterbildung weist der gewindefreie Bohrungsabschnitt einen im Wesentlichen kreisförmigen Querschnitt auf. In diesem Fall kann der gewindefreie Bohrungsabschnitt besonders einfach und kostengünstig ausgebildet werden. Es ist jedoch auch möglich, den gewindefreien Bohrungsabschnitt mit einer von einem kreisförmigen Querschnitt abweichenden Querschnittsform auszubilden.

Gemäß einer Weiterbildung ist der gewindefreie Bohrungsabschnitt parallel zu der Gewindebohrung ausgebildet. Die ermöglicht eine besonders einfache und kostengünstige Fertigung sowohl der Bohrung als auch der darin aufgenommenen Befestigungsschraube. Bevorzugt ist der gewindefreie Bohrungsabschnitt koaxial zu der Gewindebohrung ausgebildet.

Gemäß einer Weiterbildung ist das Werkzeug ein Hochgeschwindigkeitsfräser, der für eine zerspanende Bearbeitung bei Drehzahlen von mehr als 10.000 Umdrehungen pro Minute ausgelegt ist. Insbesondere bei solchen für eine Bearbeitung mit einer hohen Drehzahl ausgelegten Werkzeugen ist eine zuverlässige Sicherung gegenüber wirkenden Fliehkräften von besonderer Bedeutung.

Die Aufgabe wird auch durch ein Verfahren zum Befestigen eines Schneideinsatzes nach Anspruch 14 gelöst.

Mit dem Verfahren werden die oben mit Bezug auf das Werkzeug beschriebenen Vorteile erzielt. Die in Bezug auf das Werkzeug beschriebenen vorteilhaften Weiterbildungen können vorteilhaft ebenfalls jeweils bei dem Verfahren zur Anwendung kommen.

Weitere Vorteile und Zweckmäßigkeiten der Erfindung ergeben sich anhand der nachfolgenden Beschreibung eines Ausführungsbeispiels unter Bezugnahme auf die beigefügten Figuren.

### Von den Figuren zeigen

- Fig. 1:: eine perspektivische Ansicht eines Werkzeugs gemäß einer Ausführungsform;
- Fig. 2:: eine vergrößerte Darstellung des Sitzes mit daran angeordnetem Schneideinsatz in dem eingekreisten Bereich B von Fig. 1, jedoch ohne Befestigungsschraube;
- Fig. 3:: eine Fig. 2 entsprechende Darstellung, jedoch zusätzlich ohne Schneideinsatz;
- Fig. 4:: eine schematische Darstellung der Befestigungsschraube bei der Ausführungsform;
- Fig. 5:: eine schematische Schnittdarstellung in einer Ebene, die die Längsachse der Gewindebohrung enthält, im Bereich des Sitzes mit daran angeordnetem Schneideinsatz, jedoch ohne Befestigungsschraube;
- Fig. 6:: eine schematische perspektivische Darstellung des Schneideinsatzes bei der Ausführungsform;
- Fig. 7:: eine Fig. 5 entsprechende Schnittdarstellung mit Befestigungsschraube in einem nicht angezogenen Zustand der Befestigungsschraube;
- Fig. 8:: eine Fig. 7 entsprechende Schnittdarstellung, jedoch mit der Befestigungsschraube in einem angezogenen Zustand;
- Fig. 9:: eine schematische Schnittdarstellung in einer Richtung senkrecht zu einer Längsachse der Bohrung im Bereich des gewindefreien Bohrungsabschnitts mit Befestigungsschraube in einem nicht angezogenen Zustand; und
- Fig. 10:: eine Fig. 9 entsprechende schematische Schnittdarstellung, jedoch mit der Befestigungsschraube in einem angezogenen Zustand.

### AUSFÜHRUNGSFORM

Eine Ausführungsform wird im Folgenden unter Bezug auf die Figuren eingehender beschrieben.

Das Werkzeug 100 für die zerspanende Bearbeitung ist bei dem konkret dargestellten Ausführungsbeispiel als ein Fräswerkzeug ausgebildet, insbesondere als ein Hochgeschwindigkeitsfräser, der für eine Bearbeitung mit einer Drehzahl von bis zu mehreren Zehntausend Umdrehungen pro Minute ausgelegt ist.

Das Werkzeug 100 hat einen Grundkörper 1, der z.B. aus einem Werkzeugstahl, Wolfram-Schwermetall wie z.B. Densimet^{®} oder einem Hartmetall gebildet sein kann. Der Grundkörper 1 hat ein erstes Ende 11, das mit einer Schnittstelle zur indirekten oder direkten Verbindung mit einer Antriebsspindel einer (nicht dargestellten) Bearbeitungsmaschine versehen ist, und einem von dem ersten Ende 11 abgewandtes freies Ende 12. Der Grundkörper 1 hat eine Rotationsachse R, um die das Werkzeug 100 im Betrieb, also bei einer zerspanenden Bearbeitung, rotiert.

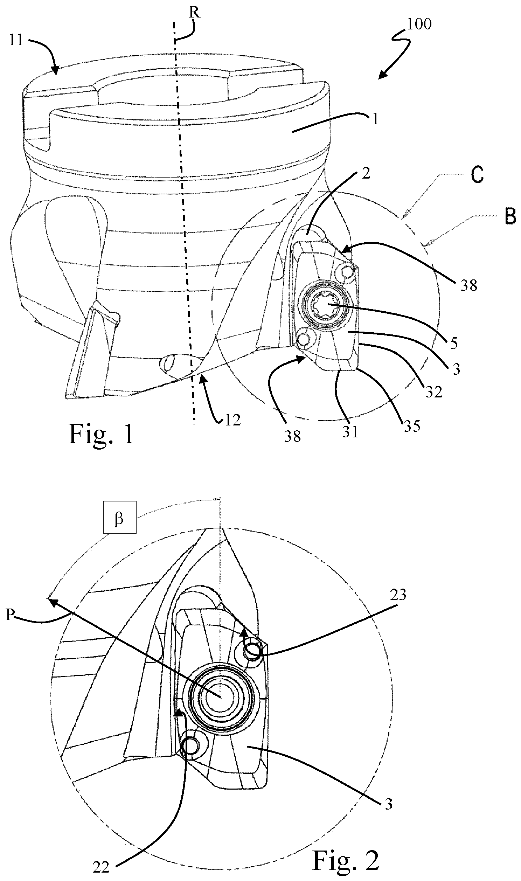

Wie in Fig. 1 zu sehen ist, ist in dem Bereich des freien Endes 12 in dem Grundkörper 1 eine Mehrzahl von Sitzen 2 für die Aufnahme von auswechselbaren Schneideinsätzen 3 vorgesehen. Die Sitze 2 sind über den Umfang des Grundkörpers 1 verteilt angeordnet. Obwohl bei dem konkret dargestellten Ausführungsbeispiel ein Grundkörper 1 gezeigt ist, der insgesamt vier Sitze 2 zur Aufnahme von auswechselbaren Schneideinsätzen 3 hat, können auch weniger solche Sitze 2, zumindest jedoch einer, oder mehr als vier Sitze 2 vorgesehen sein. Die Sitze 2 sind derart angeordnet, dass ein in diesen angeordneter Schneideinsatz 3 jeweils axial mit einer Nebenschneide 31 über das freie Ende 12 des Grundkörpers 1 hinausragt und radial mit einer Hauptschneide 32 über den Grundkörper 1 hervorsteht. Die Sitze 2 sind für eine sogenannte radiale Spannung der Schneideinsätze 3 ausgebildet, bei der die Haupterstreckungsebene des an dem jeweiligen Sitz 2 befestigten Schneideinsatzes 3 jeweils im Wesentlichen radial verläuft und sich die Längsachse der Befestigungsschraube 5, mit der der Schneideinsatz 3 an dem Sitz befestigt ist, überwiegend in der tangentialen Richtung erstreckt. Da die Sitze 2 im Wesentlichen identisch zueinander ausgebildet sind und auch die an diesen angeordneten Schneideinsätze 3 zumindest im Wesentlichen identisch zueinander sind, werden im Folgenden nur ein Sitz 2 und die Befestigung eines Schneideinsatzes 3 an diesem eingehender erläutert.

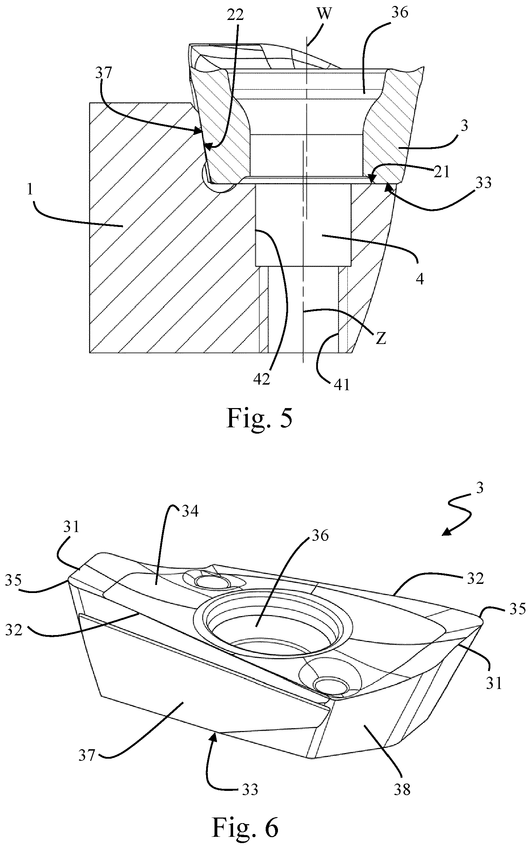

Der Schneideinsatz 3 hat eine im Wesentlichen polygonale Grundform mit einer Unterseite 33 und einer der Unterseite 33 gegenüberliegenden Oberseite 34, die als eine Spanfläche ausgebildet ist, wie insbesondere in Fig. 6 zu sehen ist. Die Unterseite 33 und die Oberseite 34 sind über Seitenflächen miteinander verbunden. Ein Durchgangsloch 36 erstreckt sich von der Oberseite 34 bis zu der Unterseite 33 durch den Schneideinsatz 3. Die Nebenschneide 31 und die Hauptschneide 32 sind entlang des Übergangs von der Oberseite 34 zu den Seitenflächen ausgebildet und über eine Schneidecke 35 miteinander verbunden. Bei dem konkret dargestellten Ausführungsbeispiel hat der Schneideinsatz 3 eine zwei-zählige Rotationssymmetrie bezüglich der Längsachse des Durchgangslochs 36, sodass zwei Schneidkantenabschnitte vorgesehen sind, die jeweils eine Hauptschneide 32 und eine über eine Schneidecke 35 mit dieser verbundene Nebenschneide 31 aufweisen. Wie in Fig. 1 zu sehen ist, befindet sich im montierten Zustand des Schneideinsatzes 3 an dem Grundkörper 1 einer der beiden Schneidkantenabschnitte in einer aktiven Position, in der die Hauptschneide 32 radial über den Grundkörper 1 hervorsteht und die Nebenschneide 31 axial über den Grundkörper 1 herausragt, der andere der beiden Schneidkantenabschnitte befindet sich in einer inaktiven Position.

Obwohl bei dem konkret dargestellten Ausführungsbeispiel ein Schneideinsatz 3 gezeigt ist, bei dem nur an dem Übergang von der Oberseite 34 zu den Seitenflächen Schneidkantenabschnitte vorgesehen sind, ist in einer Abwandlung auch eine doppelseitige Ausgestaltung des Schneideinsatzes möglich, bei der auch an dem Übergang von der Unterseite 33 zu den Seitenflächen Schneidkantenabschnitte vorgesehen sind.

Der Schneideinsatz 3 hat eine erste Seitenfläche 37, mit der der Schneideinsatz 3 nach radial innen an dem Sitz 2 abgestützt wird. Die erste Seitenfläche 37 ist auf der Seite des Schneideinsatzes 3 ausgebildet, die der in der aktiven Position befindlichen Hauptschneide 32 gegenüberliegt. Aufgrund der beschriebenen zwei-zähligen Rotationssymmetrie befindet sich auch unterhalb der Hauptfreifläche der aktiven Hauptschneide 32 eine weitere erste Seitenfläche 37, die der gegenüberliegenden inaktiven Hauptschneide 32 zugeordnet ist.

Der Schneideinsatz 3 hat ferner eine zweite Seitenfläche 38, mit der der Schneideinsatz 3 axial und nach radial außen an dem Sitz 2 abgestützt wird. Die zweite Seitenfläche 38 ist auf der Seite des Schneideinsatzes 3 ausgebildet, die der in der aktiven Position befindlichen Nebenschneide 31 gegenüberliegt. Aufgrund der beschriebenen zwei-zähligen Rotationssymmetrie befindet sich auch auf der Seite der aktiven Nebenschneide 31 eine weitere zweite Seitenfläche 38, die der gegenüberliegenden inaktiven Nebenschneide 31 zugeordnet ist.

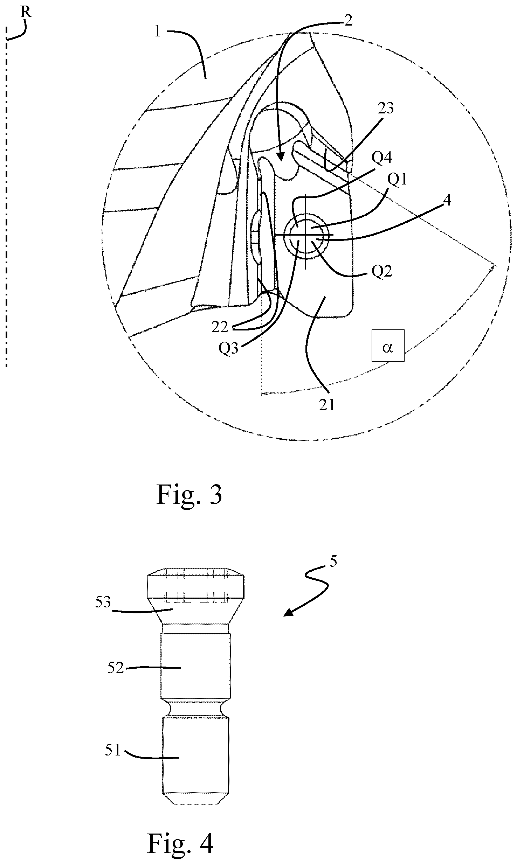

Im Folgenden wird der Sitz 2, in dem der Schneideinsatz 3 gehalten ist, mit Bezug auf Fig. 3 eingehender beschrieben.

Der Sitz 2 hat eine Grundfläche 21 zur Auflage der Unterseite 33 des Schneideinsatzes 3, eine erste seitliche Anlagefläche 22 zur Anlage der ersten Seitenfläche 37 des Schneideinsatzes 3 und eine zweite seitliche Anlagefläche 23 zur Anlage der zweiten Seitenfläche 38 des Schneideinsatzes 3.

Eine Flächennormale der Grundfläche 21 hat eine tangentiale Richtungskomponente als Hauptkomponente. Daneben kann die Flächennormale der Grundfläche 21 auch noch betragsmäßig geringere axiale und/oder radiale Richtungskomponenten aufweisen.

Die erste seitliche Anlagefläche 22 stützt den Schneideinsatz 3 nach radial innen ab. Die erste seitliche Anlagefläche 22 kann z.B. als eine durchgängige Fläche gebildet sein. Es ist z.B. aber auch möglich, dass die erste seitliche Anlagefläche 22 eine Mehrzahl von voneinander getrennten Teilflächen für eine Abstützung nach radial innen hat, wie es z.B. in Fig. 3 zu sehen ist. Um die Abstützung nach radial innen zu bewirken, hat die Flächennormale der ersten seitlichen Anlagefläche 22 eine nach radial außen gerichtete Richtungskomponente als Hauptkomponente. Die Flächennormale der ersten seitlichen Anlagefläche 22 kann dabei z.B. nur eine nach radial außen gerichtete Richtungskomponente aufweisen oder auch zusätzlich noch betragsmäßig geringere tangentiale und/oder axiale Richtungskomponenten.

Die zweite seitliche Anlagefläche 23 stützt den Schneideinsatz 3 auf seiner von dem freien Ende 12 des Grundkörpers 1 abgewandten Seite sowohl in der axialen Richtung als auch nach radial außen ab. Um dies zu bewirken, hat die Flächennormale der zweiten seitlichen Anlagefläche 23 sowohl eine axiale Richtungskomponente in Richtung des freien Endes 12 des Grundkörpers 1 als auch eine radial nach innen gerichtete Richtungskomponente. Daneben kann die Flächennormale der zweiten seitlichen Anlagefläche 23 auch noch eine geringe tangentiale Richtungskomponente aufweisen, wie es z.B. auch bei der in Fig. 3 dargestellten zweiten seitlichen Anlagefläche 23 der Fall ist.

Wie in Fig. 3 zu sehen ist, schließen die erste seitliche Anlagefläche 22 und die zweite seitliche Anlagefläche 23 in einer Blickrichtung senkrecht zu der Grundfläche 21 einen Innenwinkel α miteinander ein, der kleiner als 75° ist, bevorzugt kleiner als 65°. Bei dem konkret dargestellten Ausführungsbeispiel beträgt der Innenwinkel α ca. 60°. Die erste seitliche Anlagefläche 22 schließt mit der Grundfläche 21 einen Innenwinkel ≥ 90° ein. Ebenso schließt die zweite seitliche Anlagefläche 23 mit der Grundfläche einen Innenwinkel ≥ 90° ein. Bei dem konkret dargestellten Ausführungsbeispiel ist der Innenwinkel zwischen der Grundfläche 21 und der ersten seitlichen Anlagefläche 22 etwas größer als 90°, kann z.B. ca. 100° betragen. Gleichfalls ist der Innenwinkel zwischen der Grundfläche 21 und der zweiten seitlichen Anlagefläche 22 etwas größer als 90° und kann z.B. ca. 100° betragen. Für den Fall einer doppelseitigen Ausgestaltung des Schneideinsatzes 3, bei der auch an dem Übergang von der Unterseite 33 zu den Seitenflächen Schneidkantenabschnitte ausgebildet sind, können die Innenwinkel zwischen der Grundfläche 21 und den seitlichen Anlageflächen 22, 23 bevorzugt jeweils 90° betragen.

Wie in den Fig. 3 und Fig. 5 zu sehen ist, ist in der Grundfläche 21 des Sitzes 2 eine Bohrung 4 ausgebildet. Die Bohrung 4 erstreckt sich von der Grundfläche 21 in das Material des Grundkörpers 1 und hat in einem von der Grundfläche 21 beabstandeten Bereich eine Gewindebohrung 41 mit einem Innengewinde zum Zusammenwirken mit einem entsprechenden Außengewinde der Befestigungsschraube 5, wie noch eingehender beschrieben wird. Zwischen der Gewindebohrung 41 und der Öffnung der Bohrung 4 in der Grundfläche 21 ist ein gewindefreier Bohrungsabschnitt 42 ausgebildet. Bei dem konkret dargestellten Ausführungsbeispiel hat der gewindefreie Bohrungsabschnitt 42 einen kreisförmigen Querschnitt und erstreckt sich koaxial zu der Gewindebohrung 41. Es ist jedoch auch möglich, dass der gewindefreie Bohrungsabschnitt 42 eine andere Querschnittsform hat.

Wie in Fig. 4 zu sehen ist, hat die Befestigungsschraube 5 einen Gewindeabschnitt 51, der zum Zusammenwirken mit der Gewindebohrung 41 ausgelegt ist, einen Kopfabschnitt 53 und einen zwischen dem Kopfabschnitt 53 und dem Gewindeabschnitt 51 angeordneten gewindefreien Schaftabschnitt 52. Bei dem konkret dargestellten Ausführungsbeispiel ist zwischen dem Gewindeabschnitt 51 und dem gewindefreien Schaftabschnitt 52 eine Verjüngung vorgesehen, die eine relative elastische Auslenkung des Kopfabschnitts 53 gegenüber dem Gewindeabschnitt 51 in einer Richtung senkrecht zu einer Längsachse der Befestigungsschraube 5 begünstigt. Der Kopfabschnitt 53 der Befestigungsschraube 5 ist dazu ausgebildet, mit dem Durchgangsloch 36 in dem Schneideinsatz 3 zusammenzuwirken. Der Kopfabschnitt 53 hat einen größten Querschnitt, der größer als der kleinste Innenquerschnitt des Durchgangsloches 36 ist, sodass der Kopfabschnitt 53 nicht vollständig durch das Durchgangsloch 36 hindurchtreten kann. Der Kopfabschnitt 53 ist derart an die Form des Durchgangsloches 36 angepasst, dass sich der Kopfabschnitt 53 an dem Durchgangsloch 36 abstützen kann, insbesondere bevorzugt ringförmig abstützen kann. Der gewindefreie Schaftabschnitt 52 der Befestigungsschraube 5 hat einen Querschnitt, der deutlich kleiner als der Querschnitt des gewindefreien Bohrungsabschnitts 42 der Bohrung 4 ist. Mit anderen Worten weist der gewindefreie Bohrungsabschnitt 42 gegenüber dem gewindefreien Schaftabschnitt 52 ringsum ein Übermaß auf, das wesentlich größer als übliche Toleranzen bei einer passgenauen Fertigung ist.

Wie insbesondere in Fig. 3 dargestellt ist, weist der gewindefreie Bohrungsabschnitt 42 vier Quadranten Q1, Q2, Q3 und Q4 auf, die vorliegend im Uhrzeigersinn nummeriert sind. Ein erster Quadrant Q1 des gewindefreien Bohrungsabschnitts 42 befindet sich auf der von dem freien Ende 12 des Grundkörpers 1 abgewandten und radial außen liegenden Seite des gewindefreien Bohrungsabschnitts 42. Ein zweiter Quadrant Q2 befindet sich auf der Seite des freien Endes 12 und radial außen. Ein dritter Quadrant Q3 befindet sich ebenfalls auf der Seite des freien Endes 12, aber radial innen. Ein vierter Quadrant Q4 befindet sich auf der von dem freien Ende 12 abgewandten Seite radial innen. Mit anderen Worten befindet sich der erste Quadrant Q1 ausgehend von einer Richtung parallel zur Rotationsachse R in einem Bereich zwischen "12 Uhr und 3 Uhr", der zweite Quadrant Q2 sich in einem Bereich zwischen "3 Uhr und 6 Uhr", der dritte Quadrant Q3 sich in einem Bereich zwischen "6 Uhr und 9 Uhr" und der vierte Quadrant Q4 sich in einem Bereich zwischen "9 Uhr und 12 Uhr".

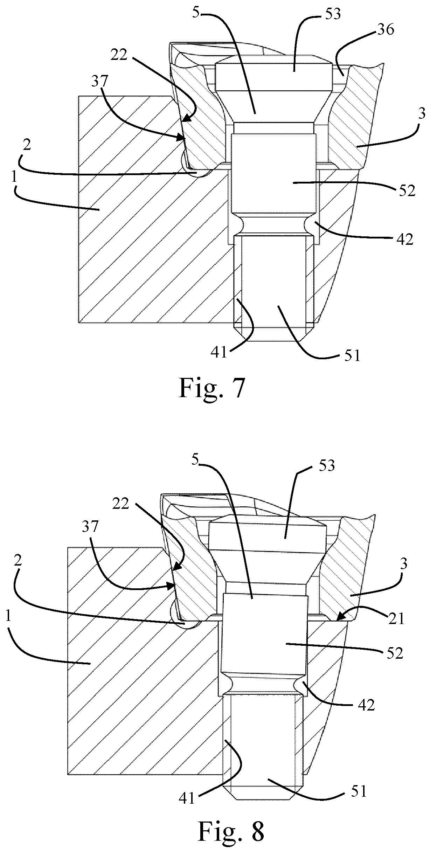

Im Folgenden wird nun unter Bezugnahme auf die Fig. 7 bis Fig. 10 eingehender beschrieben, wie der Schneideinsatz 3 mittels der Befestigungsschraube 5 an dem Sitz 2 gehalten ist.

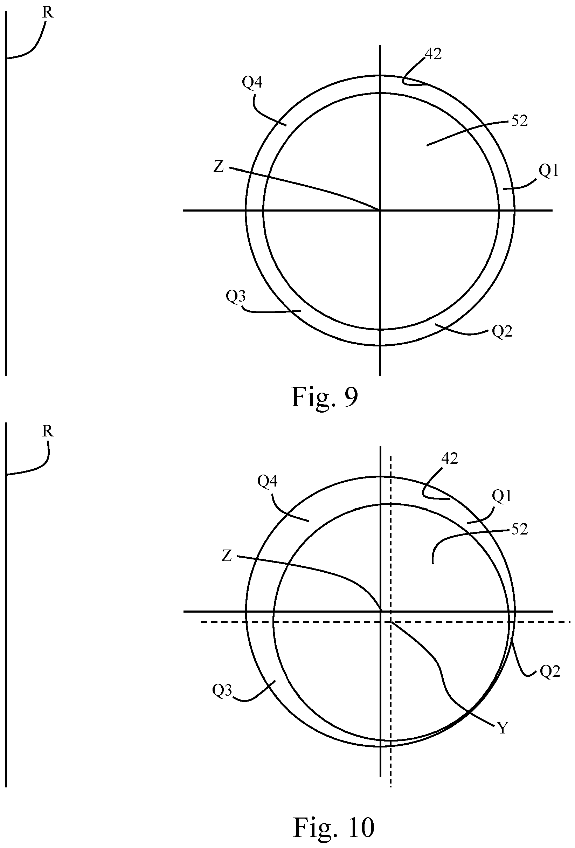

Zunächst wird unter Bezug auf die Fig. 7 und Fig. 9 die Situation beschrieben, wenn der Schneideinsatz 3 an dem Sitz 2 angeordnet ist und die Befestigungsschraube 5 mit ihrem Gewindeabschnitt 51 durch das Durchgangsloch 36 des Schneideinsatzes 3 hindurchgeführt ist, sodass der Gewindeabschnitt 51 mit der Gewindebohrung 41 in Eingriff ist und der gewindefreie Schaftabschnitt 52 in dem gewindefreien Bohrungsabschnitt 42 angeordnet ist, die Befestigungsschraube 5 aber noch nicht angezogen ist. In diesem Zustand ist der gewindefreie Schaftabschnitt 52 allseitig von dem mit einem Übermaß versehenen gewindefreien Bohrungsabschnitt 42 beabstandet, wie insbesondere in Fig. 9 zu sehen ist. Mit anderen Worten ist der gewindefreie Schaftabschnitt 52 in diesem Zustand sowohl im ersten Quadranten Q1, als auch im zweiten Quadranten Q2, im dritten Quadranten Q3 und im vierten Quadranten Q4 von dem gewindefreien Bohrungsabschnitt 42 beabstandet. Die Längsachse Z der Gewindebohrung 41 ist gegenüber der Längsachse W des Durchgangslochs 36 in dem Schneideinsatz 3 sowohl in Richtung der ersten seitlichen Anlagefläche 23 als auch in Richtung der zweiten seitlichen Anlagefläche 23 leicht versetzt, wie z.B. in Fig. 5 zu sehen ist. In Fig. 2 ist mit einem Pfeil P schematisch (nicht maßstabsgetreu) die Richtung dargestellt, in der die Längsachse Z der Gewindebohrung 41 gegenüber der Längsachse W des Durchgangslochs 36 verschoben ist. Es ist zu sehen, dass diese Richtung unter einem Winkel β gegenüber der axialen Richtung geneigt verläuft, sodass die Richtung eine radial einwärts gerichtete Richtungskomponente und eine axial nach hinten, in Richtung des ersten Endes 11 des Grundkörpers 1 gerichtete Richtungskomponente aufweist. Bei dem konkret dargestellten Beispiel beträgt der Winkel β z.B. zwischen 50° und 70°.

Bei einem Anziehen der Befestigungsschraube 5 wird der Gewindeabschnitt 51 tiefer in die Gewindebohrung eingeschraubt, sodass der Kopfabschnitt 53 der Befestigungsschraube 5 an dem Durchgangsloch 36 des Schneideinsatzes 3 in Anlage gelangt. Aufgrund des beschriebenen Versatzes zwischen der Längsachse W des Durchgangslochs 36 und der Längsachse Z der Gewindebohrung 41 gelangt der Kopfabschnitt 53 dabei zuerst in dem Bereich des Durchgangslochs 36 auf der Seite zwischen der ersten seitlichen Anlagefläche 22 und der zweiten seitlichen Anlagefläche 23 des Sitzes 2 in Anlage. Dadurch wird der Schneideinsatz 3 in Richtung zwischen die erste seitliche Anlagefläche 22 und die zweite seitliche Anlagefläche 23 gedrückt. Durch die Anlage an dem Durchgangsloch 36 wird der Kopfabschnitt 53 und mit diesem der gewindefreie Schaftabschnitt 52 der Befestigungsschraube 5 nach radial außen und in Richtung des freien Endes 12 des Grundkörpers 1 elastisch ausgelenkt, sodass der gewindefreie Schaftabschnitt 52 in den zweiten Quadranten Q2 des gewindefreien Bohrungsabschnitts 42 ausgelenkt wird. Die elastische Auslenkung erfolgt dabei so lange, bis der gewindefreie Schaftabschnitt 52 in dem zweiten Quadranten Q2 des gewindefreien Bohrungsabschnitts 42 an dem gewindefreien Bohrungsabschnitt 42 anliegt. Dieser Zustand ist in den Fig. 8 und Fig. 10 dargestellt. In Fig. 10 ist der resultierende Versatz der Längsachse Y der Befestigungsschraube 5 in dem Bereich des gewindefreien Schaftabschnitts 52 gegenüber der Längsachse Z der Gewindebohrung 41 schematisch dargestellt. Neben der Sicherung nach radial außen über die zweite seitliche Anlagefläche 23 wird der Schneideinsatz 3 in dieser Weise über das Zusammenwirken des gewindefreien Schaftabschnitts 52 mit dem gewindefreien Bohrungsabschnitt 42 an einer weiteren Position formschlüssig nach radial außen gesichert, sodass der Schneideinsatz 3 besonders zuverlässig gegenüber bei der zerspanenden Bearbeitung wirkenden Fliehkräften gesichert wird. Da die Abstützung in dem gewindefreien Schaftabschnitt 52 erfolgt, wirken die durch Fliehkräfte verursachten Scherkräfte an der Befestigungsschraube 5 nicht an dem schwächeren Gewindeabschnitt 51 auf die Befestigungsschraube 5 ein, sondern an dem deutlich stabileren gewindefreien Schaftabschnitt 52, wodurch das Risiko eines Materialversagens der Befestigungsschraube 5 verringert ist. Durch elastische Deformation der Befestigungsschraube 5 legt sich der Kopfabschnitt 53 der Befestigungsschraube 5 formschlüssig an dem Durchgangsloch 36 an. Das Zusammenwirken des größeren Kopfabschnitts 53 der Befestigungsschraube 5 mit dem kleineren Durchgangsloch 36 des Schneideinsatzes 3 verspannt den Schneideinsatz 3 dabei zuverlässig in Richtung der Grundfläche 21 und sichert den Schneideinsatz 3 formschlüssig gegenüber einem Abheben von der Grundfläche 21.

In dem ersten Quadranten Q1, dem dritten Quadranten Q3 und dem vierten Quadranten 4 des gewindefreien Bohrungsabschnitts 42 liegt der gewindefreie Schaftabschnitt 52 der Befestigungsschraube 5 aufgrund des Übermaßes des gewindefreien Bohrungsabschnitts 42 jeweils nicht an, wenn die Befestigungsschraube 5 angezogen ist, wie insbesondere in Fig. 10 zu erkennen ist. Über die elastische Deformation der Befestigungsschraube 5, bis der gewindefreie Schaftabschnitt 52 an dem gewindefreien Bohrungsabschnitt 42 zur Anlage gelangt, können Fertigungstoleranzen des Schneideinsatzes 3 sowie der ersten seitlichen Anlagefläche 22 und der zweiten seitlichen Anlagefläche 23 über einen relativ großen Bereich problemlos kompensiert werden. Toleranzen in der Lage und Ausrichtung der ersten seitlichen Anlagefläche 22 und der zweiten seitlichen Anlagefläche 23 relativ zueinander werden dabei dadurch kompensiert, dass der gewindefreie Schaftabschnitt 52 in dem zweiten Quadranten Q2 des gewindefreien Bohrungsabschnitts 42 entweder weiter in Richtung des freien Endes 12 oder weiter radial außen zur Anlage gelangt. Die bohrungsseitig in Umfangsrichtung konkave Form der Wand des gewindefreien Bohrungsabschnitts 42 in dem zweiten Quadranten Q2 ermöglicht dabei die problemlose Ausrichtung des gewindefreien Schaftabschnitts 52 in diese Richtung. Obwohl in dem dargestellten Ausführungsbeispiel eine kreisrunde Querschnittsform des gewindefreien Bohrungsabschnitts 42 gezeigt ist, die herstellungstechnisch besonders einfach und kostengünstig zu realisieren ist, ist die Querschnittsform des gewindefreien Bohrungsabschnitts 42 jedoch nicht auf eine solche kreisrunde Form beschränkt, sondern es sind auch andere Querschnittsformen möglich, die Wand des gewindefreien Bohrungsabschnitts 42 sollte jedoch zumindest in dem zweiten Quadranten bevorzugt in Umfangsrichtung konkav gekrümmt ausgebildet sein.

## Patentansprüche

1. Werkzeug (100) für die zerspanende Bearbeitung mit
einem Grundkörper (1), der eine Rotationsachse (R) hat, um die das Werkzeug im Betrieb rotiert,
zumindest einem an dem Grundkörper (1) ausgebildeten Sitz (2) zur Aufnahme eines auswechselbaren Schneideinsatzes (3),
einer Befestigungsschraube (5) zur Befestigung des Schneideinsatzes (3) an dem Sitz (2), und
einem an dem Sitz (2) befestigten Schneideinsatz (3),
wobei der Sitz (2) eine Grundfläche (21) zur Auflage einer Unterseite (33) des Schneideinsatzes (3) und eine erste seitliche Anlagefläche (22) zur Anlage einer ersten Seitenfläche (37) des Schneideinsatzes (3), welche erste seitliche Anlagefläche (22) den Schneideinsatz (3) nach radial innen abstützt, aufweist und in der Grundfläche (21) eine Bohrung (4) zur Aufnahme der Befestigungsschraube (5) ausgebildet ist,
wobei die Bohrung (4) beabstandet von der Grundfläche (21) eine Gewindebohrung (41) und näher in Richtung der Grundfläche (21) einen gewindefreien Bohrungsabschnitt (42) aufweist,
wobei die Befestigungsschraube (5) einen Gewindeabschnitt (51) zum Zusammenwirken mit der Gewindebohrung (41), einen Kopfabschnitt (53) zum Abstützen in einem Durchgangsloch (36) des Schneideinsatzes (3) und zwischen dem Gewindeabschnitt (51) und dem Kopfabschnitt (53) einen gewindefreien Schaftabschnitt (52) aufweist, welcher gewindefreie Schaftabschnitt (52) einen kleineren Querschnitt als der gewindefreie Bohrungsabschnitt (42) aufweist,
wobei der Schneideinsatz (3) derart an dem Sitz (2) befestigt ist, dass sich der Kopfabschnitt (53) der Befestigungsschraube (5) an dem Durchgangsloch (36) des Schneideinsatzes (3) abstützt, der Gewindeabschnitt (51) der Befestigungsschraube (5) mit der Gewindebohrung (41) zusammenwirkt und der Kopfabschnitt (53) der Befestigungsschraube (3) elastisch ausgelenkt ist,
**dadurch gekennzeichnet, dass** der Sitz (2) eine zweite seitliche Anlagefläche (23) zur Anlage einer zweiten Seitenfläche (38) des Schneideinsatzes (3), welche zweite seitliche Anlagefläche (23) den Schneideinsatz (3) axial und nach radial außen abstützt, aufweist und dass der Kopfabschnitt (53) der Befestigungsschraube (3) derart elastisch ausgelenkt ist, dass sich der gewindefreie Schaftabschnitt (52) in Blickrichtung senkrecht zu der Grundfläche (21) in einem radial außen und axial in Richtung eines freien Endes (12) des Werkzeugs befindlichen zweiten Quadranten (Q2) an dem gewindefreien Bohrungsabschnitt (42) abstützt.

2. Werkzeug nach Anspruch 1, wobei der gewindefreie Schaftabschnitt (52) in einem radial innen und von dem freien Ende (21) des Werkzeugs abgewandt befindlichen vierten Quadranten (Q4) von dem gewindefreien Bohrungsabschnitt (42) beabstandet ist.

3. Werkzeug nach Anspruch 1 oder 2, wobei der Kopfabschnitt (53) der Befestigungsschraube (5) elastisch nach radial außen und axial in Richtung des freien Endes (12) des Werkzeugs ausgelenkt ist.

4. Werkzeug nach einem der vorangehenden Ansprüche, wobei die erste seitliche Anlagefläche (22) und die zweite seitliche Anlagefläche (23) in einer Blickrichtung senkrecht zu der Grundfläche (21) einen Winkel (α) < 75° miteinander einschließen, bevorzugt < 65°.

5. Werkzeug nach einem der vorangehenden Ansprüche, wobei der Kopfabschnitt der (53) Befestigungsschraube (5) einen größten Querschnitt senkrecht zu einer Achse der Befestigungsschraube (5) hat, der größer als ein kleinster Querschnitt des Durchgangslochs (36) ist.

6. Werkzeug nach einem der vorangehenden Ansprüche, wobei eine Längsachse (Z) der Gewindebohrung (4) in einer Ebene des Kontakts zwischen dem Kopfabschnitt (53) der Befestigungsschraube (5) und dem Durchgangsloch (36) des Schneideinsatzes (3) gegenüber der Längsachse (W) des Durchgangsloches (36) in Richtung zu der ersten seitlichen Anlagefläche (22) und in Richtung zu der zweiten seitlichen Anlagefläche (23) versetzt ist.

7. Werkzeug nach einem der vorangehenden Ansprüche, wobei eine Flächennormale der ersten seitlichen Anlagefläche (22) eine nach radial außen gerichtete Richtungskomponente als Hauptkomponente aufweist.

8. Werkzeug nach einem der vorangehenden Ansprüche, wobei eine Flächennormale der zweiten seitlichen Anlagefläche (23) eine axiale Richtungskomponente und eine nach radial innen gerichtete Richtungskomponente aufweist.

9. Werkzeug nach einem der vorangehenden Ansprüche, wobei eine Flächennormale der Grundfläche (21) eine tangentiale Richtungskomponente als Hauptkomponente aufweist.

10. Werkzeug nach einem der vorangehenden Ansprüche, wobei die Wand des gewindefreien Bohrungsabschnitts (42) zumindest in dem radial außen und axial in Richtung des freien Endes (12) des Werkzeugs befindlichen zweiten Quadranten (Q2) der Bohrung (4) bohrungsseitig in Umfangsrichtung konkav gekrümmt ausgebildet ist.

11. Werkzeug nach einem der vorangehenden Ansprüche, wobei der gewindefreie Bohrungsabschnitt (42) einen im Wesentlichen kreisförmigen Querschnitt aufweist.

12. Werkzeug nach einem der vorangehenden Ansprüche, wobei der gewindefreie Bohrungsabschnitt (42) parallel zu der Gewindebohrung (41) ausgebildet ist.

13. Werkzeug nach einem der vorangehenden Ansprüche, wobei das Werkzeug (100) ein Hochgeschwindigkeitsfräser ist, der für eine zerspanende Bearbeitung bei Drehzahlen von mehr als 10.000 Umdrehungen pro Minute ausgelegt ist.

14. Verfahren zum Befestigen eines Schneideinsatzes (3) an einem Sitz (2) eines Grundkörpers (1) eines Werkzeugs (100) nach einem der vorangehenden Ansprüche, wobei das Verfahren die folgenden Schritte aufweist:
- Platzieren des Schneideinsatzes (3) an dem Sitz (2), sodass sich dessen Unterseite (33) an der Grundfläche (21) abstützt, eine erste Seitenfläche (37) an der ersten seitlichen Anlagefläche (22) anliegt und eine zweite Seitenfläche (38) an der zweiten seitlichen Anlagefläche (23) anliegt,
- Hindurchführen eines Gewindeabschnitts (51) einer Befestigungsschraube (5) durch ein Durchgangsloch (36) in dem Schneideinsatz (3) und in die Bohrung (4), sodass der Gewindeabschnitt (51) mit der Gewindebohrung (41) in Eingriff gelangt und ein zwischen dem Gewindeabschnitt (51) und einem Kopfabschnitt (53) der Befestigungsschraube (5) angeordneter gewindefreier Schaftabschnitt (52) ringsum beabstandet in dem gewindefreien Bohrungsabschnitt (42) zu liegen kommt, und
- Einschrauben der Befestigungsschraube (5), sodass zunächst der Kopfabschnitt (53) an dem Durchgangsloch (36) auf einer von einem freien Ende (12) des Grundkörpers (1) abgewandten und radial innenliegenden Seite zur Anlage gelangt, und anschließend der Kopfabschnitt (53) und der gewindefreie Schaftabschnitt (52) nach radial außen und in Richtung des freien Endes (12) des Grundkörpers (1) elastisch ausgelenkt werden, bis der gewindefreie Schaftabschnitt (52) an einem radial außen und axial in Richtung des freien Endes (12) befindlichen zweiten Quadranten (Q2) des gewindefreien Bohrungsabschnitts (42) anliegt.

## Claims

1. Tool (100) for cutting processing having
a base member (1) which has a rotation axis (R) about which the tool rotates during operation,
at least one seat (2) which is formed on the base member (1) for receiving a replaceable cutting insert (3),
a securing screw (5) for securing the cutting insert (3) to the seat (2), and
a cutting insert (3) which is secured to the seat (2),
wherein the seat (2) has a base face (21) for supporting a lower side (33) of the cutting insert (3), and a first lateral abutment face (22) for abutting against a first lateral face (37) of the cutting insert (3), which first lateral abutment face (22) supports the cutting insert (3) in a radially inward direction, and a hole (4) for receiving the securing screw (5) is formed in the base face (21),
wherein the hole (4) has with spacing from the base face (21) a threaded hole (41) and closer in the direction of the base face (21) a thread-free hole portion (42),
wherein the securing screw (5) has a threaded portion (51) for cooperating with the threaded hole (41), a head portion (53) for supporting in a through-hole (36) of the cutting insert (3) and between the threaded portion (51) and the head portion (53) a thread-free shaft portion (52), which thread-free shaft portion (52) has a smaller cross section than the thread-free hole portion (42),
wherein the cutting insert (3) is secured to the seat (2) in such a manner that the head portion (53) of the securing screw (5) is supported on the through-hole (36) of the cutting insert (3), the threaded portion (51) of the securing screw (5) cooperates with the threaded hole (41) and the head portion (53) of the securing screw (3) is resiliently deflected **characterized in that** the seat (2) has a second lateral abutment face (23) for abutting against a second lateral face (38) of the cutting insert (3), which second lateral abutment face (23) supports the cutting insert (3) axially and in a radially outward direction and that the head portion (53) of the securing screw (3) is resiliently deflected in such a manner that the thread-free shaft portion (52) is supported when viewed in a direction perpendicular to the base face (21) in a second quadrant (Q2) which is located in a radially outward direction and axially in the direction of a free end (12) of the tool on the thread-free hole portion (42).

2. Tool according to claim 1, wherein the thread-free shaft portion (52) in a fourth quadrant (Q4) which is located in a radially inward direction and faces away from the free end (21) of the tool is spaced apart from the thread-free hole portion (42).

3. Tool according to claim 1 or 2, wherein the head portion (53) of the securing screw (5) is deflected resiliently in a radially outward direction and axially in the direction of the free end (12) of the tool.

4. Tool according to any one of the preceding claims, wherein the first lateral abutment face (22) and the second lateral abutment face (23) enclose in a viewing direction perpendicular to the base face (21) an angle (α) < 75° with each other, preferably < 65°.

5. Tool according to any one of the preceding claims, wherein the head portion (53) of the securing screw (5) has a largest cross section perpendicularly to an axis of the securing screw (5) which is greater than a smallest cross section of the through-hole (36).

6. Tool according to any one of the preceding claims, wherein a longitudinal axis (Z) of the threaded hole (4) is offset in a plane of the contact between the head portion (53) of the securing screw (5) and the through-hole (36) of the cutting insert (3) with respect to the longitudinal axis (W) of the through-hole (36) in the direction towards the first lateral abutment face (22) and in the direction towards the second lateral abutment face (23).

7. Tool according to any one of the preceding claims, wherein a surface normal of the first lateral abutment face (22) has a radially outwardly directed direction component as a main component.

8. Tool according to any one of the preceding claims, wherein a surface normal of the second lateral abutment face (23) has an axial direction component and a radially inwardly directed direction component.

9. Tool according to any one of the preceding claims, wherein a surface normal of the base face (21) has a tangential direction component as a main component.

10. Tool according to any one of the preceding claims, wherein the wall of the thread-free hole portion (42) at least in the second quadrant (Q2), which is located in a radially outward direction and axially in the direction of the free end (12) of the tool, of the hole (4) is constructed to be curved in a concave manner at the hole side in the circumferential direction.

11. Tool according to any one of the preceding claims, wherein the thread-free hole portion (42) has a substantially circular cross section.

12. Tool according to any one of the preceding claims, wherein the thread-free hole portion (42) is constructed parallel with the threaded hole (41).

13. Tool according to any one of the preceding claims, wherein the tool (100) is a high-speed milling cutter which is configured for a cutting processing operation at speeds of more than 10,000 revolutions per minute.

14. Method for securing a cutting insert (3) to a seat (2) of a base member (1) of a tool (100) according to any one of the preceding claims,
wherein the method has the following steps:
- placing the cutting insert (3) on the seat (2) so that the lower side (33) thereof is supported on the base face (21), a first lateral face (37) is supported on the first lateral abutment face (22) and a second lateral face (38) is supported on the second lateral abutment face (23),
- guiding a threaded portion (51) of a securing screw (5) through a through-hole (36) in the cutting insert (3) and into the hole (4) so that the threaded portion (51) moves into engagement with the threaded hole (41) and a thread-free shaft portion (52) which is arranged between the threaded portion (51) and a head portion (53) of the securing screw (5) comes to rest with spacing all around in the thread-free hole portion (42), and
- screwing in the securing screw (5) so that the head portion (53) initially moves into abutment with the through-hole (36) at a radially inner side facing away from a free end (12) of the base member (1) and subsequently the head portion (53) and the thread-free shaft portion (52) are resiliently deflected in a radially outward direction and in the direction of the free end (12) of the base member (1) until the thread-free shaft portion (52) moves into abutment with a second quadrant (Q2), which is located in a radially outward direction and axially in the direction of the free end (12), of the thread-free hole portion (42).

## Revendications

1. Outil (100) pour l'usinage par enlèvement de copeaux comprenant
un corps de base (1) qui définit un axe de rotation (R) autour duquel tourne l'outil pendant le fonctionnement, au moins un siège (2) réalisé au niveau du corps de base (1) pour recevoir un insert de coupe remplaçable (3), une vis de fixation (5) pour la fixation de l'insert de coupe (3) sur le siège (2), et
un insert de coupe (3) fixé sur le siège (2),
le siège (2) présentant une surface de base (21) pour l'appui d'un côté inférieur (33) de l'insert de coupe (3) et une première surface d'appui latérale (22) pour l'appui d'une première surface latérale (37) de l'insert de coupe (3), laquelle première surface d'appui latérale (22) soutient l'insert de coupe (3) radialement vers l'intérieur, et un alésage (4) étant réalisé dans la surface de base (21) pour recevoir la vis de fixation (5),
l'alésage (4) présentant, à distance de la surface de base (21), un alésage fileté (41) et, plus près dans la direction de la surface de base (21), une portion d'alésage sans filetage (42),
la vis de fixation (5) présentant une portion filetée (51) destinée à coopérer avec l'alésage fileté (41), une portion de tête (53) destinée à prendre appui dans un trou de passage (36) de l'insert de coupe (3) et, entre la portion filetée (51) et la portion de tête (53), une portion de tige sans filetage (52), laquelle portion de tige sans filetage (52) présente une plus petite section transversale que la portion d'alésage sans filetage (42), l'insert de coupe (3) étant fixé au siège (2) de telle sorte que la portion de tête (53) de la vis de fixation (5) s'appuie sur l'alésage de passage (36) de l'insert de coupe (3), la portion filetée (51) de la vis de fixation (5) coopère avec l'alésage fileté (41) et la portion de tête (53) de la vis de fixation (3) est déviée élastiquement,
**caractérisé en ce que** le siège (2) présente une deuxième surface d'appui latérale (23) pour l'appui d'une deuxième surface latérale (38) de l'insert de coupe (3), laquelle deuxième surface d'appui latérale (23) soutient l'insert de coupe (3) axialement et radialement vers l'extérieur, et **en ce que** la portion de tête (53) de la vis de fixation (3) est déviée élastiquement de telle sorte que la portion de tige sans filetage (52) s'appuie sur la portion d'alésage sans filetage (42) dans un deuxième quadrant (Q2) situé radialement à l'extérieur et axialement en direction d'une extrémité libre (12) de l'outil, selon une direction d'observation perpendiculaire à la surface de base (21).

2. Outil selon la revendication 1, dans lequel la portion de tige sans filetage (52) est espacée de la portion d'alésage sans filetage (42) dans un quatrième quadrant (Q4) situé radialement à l'intérieur et à l'opposé de l'extrémité libre (21) de l'outil.

3. Outil selon la revendication 1 ou la revendication 2, dans lequel la portion de tête (53) de la vis de fixation (5) est déviée élastiquement vers l'extérieur radialement et axialement en direction de l'extrémité libre (12) de l'outil.

4. Outil selon l'une des revendications précédentes, dans lequel la première surface d'appui latérale (22) et la deuxième surface d'appui latérale (23) forment entre elles un angle (α) < 75°, de préférence < 65°, selon une direction d'observation perpendiculaire à la surface de base (21).

5. Outil selon l'une des revendications précédentes, dans lequel la portion de tête (53) de la vis de fixation (5) a une section transversale la plus grande perpendiculairement à un axe de la vis de fixation (5), qui est supérieure à une section transversale la plus petite du trou de passage (36).

6. Outil selon l'une des revendications précédentes, dans lequel un axe longitudinal (Z) de l'alésage fileté (4) dans un plan de contact entre la portion de tête (53) de la vis de fixation (5) et le trou de passage (36) de l'insert de coupe (3) est décalé par rapport à l'axe longitudinal (W) du trou de passage (36) en direction de la première surface d'appui latérale (22) et en direction de la deuxième surface d'appui latérale (23).

7. Outil selon l'une des revendications précédentes, dans lequel une normale à la surface de la première surface d'appui latérale (22) présente une composante directionnelle dirigée radialement vers l'extérieur en tant que composante principale.

8. Outil selon l'une des revendications précédentes, dans lequel une normale à la surface de la deuxième surface d'appui latérale (23) présente une composante directionnelle axiale et une composante directionnelle orientée radialement vers l'intérieur.

9. Outil selon l'une des revendications précédentes, dans lequel une normale à la surface de base (21) présente une composante directionnelle tangentielle en tant que composante principale.

10. Outil selon l'une des revendications précédentes, dans lequel la paroi de la portion d'alésage sans filetage (42) est réalisée avec une courbure concave dans la direction circonférentielle du côté de l'alésage, au moins dans le deuxième quadrant (Q2) de l'alésage (4) situé radialement à l'extérieur et axialement en direction de l'extrémité libre (12) de l'outil.

11. Outil selon l'une des revendications précédentes, dans lequel la portion d'alésage sans filetage (42) présente une section transversale essentiellement circulaire.

12. Outil selon l'une des revendications précédentes, dans lequel la portion d'alésage sans filetage (42) est réalisée de façon parallèle à l'alésage fileté (41).

13. Outil selon l'une des revendications précédentes, dans lequel l'outil (100) est une fraise à grande vitesse conçue pour un usinage par enlèvement de copeaux à des vitesses de rotation supérieures à 10 000 tours par minute.

14. Procédé de fixation d'un insert de coupe (3) sur un siège (2) d'un corps de base (1) d'un outil (100) selon l'une des revendications précédentes, le procédé comprenant les étapes suivantes :
- placer l'insert de coupe (3) sur le siège (2) de sorte que sa face inférieure (33) s'appuie sur la surface de base (21), qu'une première face latérale (37) soit en appui sur la première surface d'appui latérale (22) et qu'une deuxième face latérale (38) soit en appui sur la deuxième surface d'appui latérale (23),
- engager une portion filetée (51) d'une vis de fixation (5) à travers un trou de passage (36) dans l'insert de coupe (3) et dans l'alésage (4), de sorte que la portion filetée (51) vienne en prise avec l'alésage fileté (41) et qu'une portion de tige sans filetage (52) agencée entre la portion filetée (51) et une portion de tête (53) de la vis de fixation (5) vienne se placer dans la portion d'alésage sans filetage (42) en étant espacée sur tout le pourtour, et
- visser la vis de fixation (5), de sorte que, tout d'abord, la portion de tête (53) vienne en appui contre l'alésage de passage (36) sur un côté opposé à une extrémité libre (12) du corps de base (1) et situé radialement à l'intérieur, et, ensuite, que la portion de tête (53) et la portion de tige sans filetage (52) soient déviées élastiquement vers l'extérieur radialement et en direction de l'extrémité libre (12) du corps de base (1), jusqu'à ce que la portion de tige sans filetage (52) s'applique contre un deuxième quadrant (Q2) de la portion d'alésage sans filetage (42), situé radialement à l'extérieur et axialement en direction de l'extrémité libre (12).
